Europäisches Patentamt

European Patent Office

Office européen des brevets

(19)

(11) EP 0 964 506 A2

(12) EUROPEAN PATENT APPLICATION

(43) Date of publication:
15.12.1999 Bulletin 1999/50

(51) Int Cl.⁶: H02P 6/08

(21) Application number: 99304321.5

(22) Date of filing: 03.06.1999

(84) Designated Contracting States:
AT BE CH CY DE DK ES FI FR GB GR IE IT LI LU
MC NL PT SE
Designated Extension States:
AL LT LV MK RO SI

(30) Priority: 08.06.1998 JP 15964698

(71) Applicant: MATSUSHITA ELECTRIC INDUSTRIAL
CO., LTD.
Kadoma-shi, Osaka 571-8501 (JP)

(72) Inventors:
• Wada, Jyoji
Izumi-ku, Yokohama 245-0003 (JP)

• Tamura, Kazushige
Sagamihara-shi, Kanagawa-ken 229-0031 (JP)
• Kawamata, Tadao
Aoba-ku, Yokohama 227-0035 (JP)
• Wakiyama, Koji
Aoba-ku, Yokohama 227-0063 (JP)
• Higuchi, Kazutaka
Kanagawa-ku, Yokohama 221-0804 (JP)

(74) Representative:
Dempster, Benjamin John Naftel et al
Withers & Rogers,
Goldings House,
2 Hays Lane
London SE1 2HW (GB)

(54) **Three-phase brushless servo motor**

(57)     A three-phase alternating current voltage signal composed of three alternating current voltage signals, of which phases are shifted from each other by an electric angle of 120 degrees, is produced in three Hall devices according to a Hall effect caused by an interaction between the Hall devices and a magnetic unit when the magnetic unit is rotated at a rotational speed in a three-phase brushless servo motor. In this case, because inclinations of straightly-rising line portions and straightly-falling line portions in each alternating current voltage signal indicate the rotational speed of the magnetic unit, the straightly-rising line portions and the straightly-falling line portions are extracted from the three-phase alternating current voltage signal and are connected to each other to produce a first wave-form processed signal indirectly indicating the rotational speed, and the first wave-form processed signal is differentiated to produce a second wave-form processed signal directly indicating the rotational speed. A servo control is performed for the three-phase brushless servo motor according to the second wave-form processed signal to adjust the rotational speed to a target rotational speed. Accordingly, the rotational speed in the three-phase brushless servo motor can be maintained to the target rotational speed without any rotational speed detecting encoder.

FIG. 3

## Description

The present invention relates generally to a three-phase brushless servo motor, and more particularly to a three-phase brushless servo motor in which a servo control is performed to control a rotational speed undesirably changed by turbulences.

A rotational speed (or the number of revolutions) in a three-phase brushless servo motor is changed by turbulences. Therefore, the rotational speed in a conventional three-phase brushless servo motor is always detected by a rotational speed detecting encoder, and a motor coil voltage applied to the conventional three-phase brushless servo motor is controlled to set the rotational speed to a constant value.

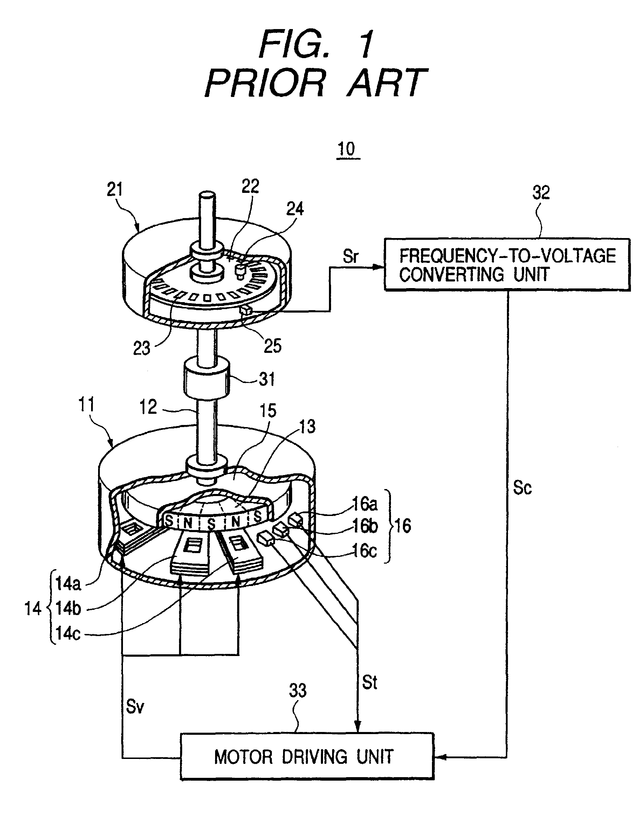

Fig. 1 is a perspective view of a conventional three-phase brushless motor system.

As shown in Fig. 1, a conventional three-phase brushless servo motor 10 is composed of:

a three-phase brushless motor 11;
a rotational speed detecting encoder 21 for detecting a rotational speed signal Sr indicating a particular rotational speed in the three-phase brushless motor 11;
a connecting unit 31 for connecting the three-phase brushless motor 11 and the rotational speed detecting encoder 21;
a frequency-to-voltage converting unit 32 for converting a frequency of pulses of the rotational speed signal Sr detected by the rotational speed detecting encoder 21 into a converted rotational speed signal Sc which indicates a constant voltage value depending on a value of the particular rotational speed; and
a motor driving circuit 33 for applying a motor coil voltage signal Sv indicating a motor coil voltage, of which a value is determined according to the converted rotational speed signal Sc transmitted from the frequency-to-voltage converting unit 32 and a timing setting signal St transmitted from the three-phase brushless motor 11, to the three-phase brushless motor 11 to control the particular rotational speed to a target rotational speed value.

The three-phase brushless motor 11 is composed of:

a shaft 12 connecting the three-phase brushless motor 11 and the rotational speed detecting encoder 21 through the connecting unit 31;
a magnet unit 13 in which a plurality of magnets are arranged around the shaft 12 in a fan shape to alternately place N and S magnetic poles of the magnets on an outer side;
three motor coils 14 (14a, 14b and 14c), arranged around the shaft 12 at electric angles of 120 degrees from each other, for rotating the magnet unit 13 around the shaft 12 according to an electro-magnetic effect caused by the motor coil voltage signal Sv output from the motor driving circuit 33;
a back-yoke 15 covering the magnetic unit 13; and
three Hall devices 16 (16a, 16b and 16c), arranged around the shaft 12 at electric angles of 120 degrees from each other, for inducing a three-phase alternating current voltage signal composed of a first alternating current voltage signal, a second alternating current voltage signal and a third alternating current voltage signal, of which phases are shifted from each other by the electric angle of 120 degrees, according to a Hall effect caused by an interaction between the Hall devices 16 and the magnetic unit 13 and outputting the three-phase alternating current voltage signal to the motor driving circuit 33 as the timing setting signal St.

The rotational speed detecting encoder 21 is composed of: a rotational disc 22 rotated with the magnet unit 13 through the shaft 12;

a group of slits 23 circularly arranged around the shaft 12 in the rotational disc 22;
a light emitting device 24, arranged on the rotational disc 22, for emitting light to intermittently transmit the light through each of the slits 23;
a light receiving device 25, arranged under the rotational disc 22, for receiving beams of the light intermittently transmitted through the slits 23 and producing the rotational speed signal Sr having a plurality of pulses at regular intervals from the beams of light, a frequency of the pulses denoting the particular rotational speed indicated by the rotational speed signal Sr.

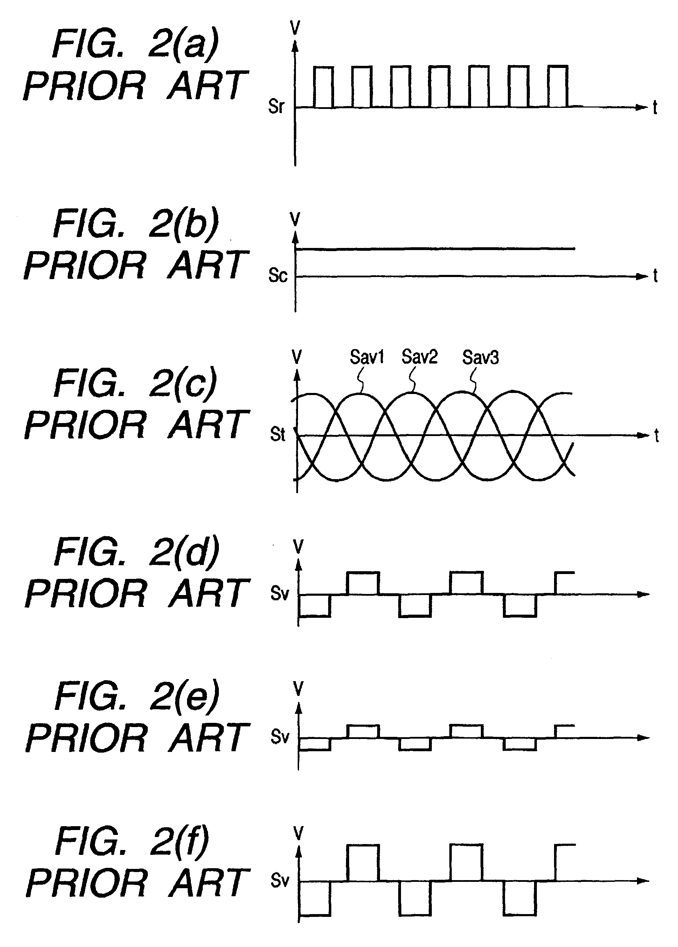

In the above configuration, when a motor coil voltage signal Sv is applied from the motor driving circuit 33 to the motor coils 14, the magnetic unit 13 is rotated at a particular rotational speed corresponding to a motor coil voltage indicated by the motor coil voltage signal Sv according to an electro-magnetic effect. The rotation of the magnetic unit 13 is transmitted to the rotational speed detecting encoder 21 through the shaft 12, and the rotational disc 22 is rotated at the same particular rotational speed as that of the magnetic unit 13. Therefore, light emitted from the light emitting device 24 to the light receiving unit 25 through the slits 23 is chopped at prescribed time intervals, a plurality of beams of the light transmitting through the slits 23 are produced at the prescribed time intervals, so that a rotational speed signal Sr shown in Fig. 2(a) is obtained in the rotational speed detecting encoder 21. In the rotational speed signal Sr, a plurality of pulses are arranged at a particular frequency corresponding to the particular rotational speed. Thereafter, a converted rotational speed signal Sc indicating a constant voltage corresponding to the particular rotational speed of the magnetic unit 13 is produced from the rotational speed signal Sr in the frequency-to-voltage converting unit 32 and is output to the motor driving unit 33. The converted rotational speed signal Sc is shown in Fig. 2(b).

Also, an electric potential difference, of which a level is changed each time the N or S pole of the magnetic unit 13 passes over the Hall device 16, is induced in each of the Hall devices according to a Hall effect caused by an interaction with the magnetic unit 13 when the magnetic unit 13 is rotated at the particular rotational speed, and three alternating current voltages, of which phases are shifted from each other by the electric angle of 120 degrees, are produced in the Hall devices 16 as three alternating current voltage signals Sav1, Sav2 and Sav3, and a three-phase alternating current voltage signal composed of the three alternating current voltage signals is applied to the motor driving circuit 33 as a timing setting signal St. A wave-form of the timing setting signal St is shown in Fig. 2(c).

Thereafter, in the motor driving circuit 33, a changing timing of a motor coil voltage to be applied to the motor coils 14 is adjusted according to the three-phase alternating current voltage, and a level of the motor coil voltage is adjusted according to the converted rotational speed signal Sc. A motor coil voltage signal Sv indicating a motor coil voltage is shown in each of Fig. 2(d), Fig. 2(e) and Fig. 2(f). In cases where the converted rotational speed signal Sc indicates a target rotational speed value, as shown in Fig. 2(d), the motor coil voltage signal Sv indicating a standard motor coil voltage is output from the motor driving circuit 33 to the motor coils 14 to rotate the magnetic unit 13 at the same particular rotational speed. However, in cases where the rotational speed in the three-phase brushless motor 11 is changed by turbulences, the converted rotational speed signal Sc does not indicate the target rotational speed value. In cases where the converted rotational speed signal Sc indicates a particular rotational speed higher than the target rotational speed value, it is required to slow down the rotational speed of the magnetic unit 13. Therefore, as shown in Fig. 2(e), the motor coil voltage signal Sv indicating a motor coil voltage lower than the standard motor coil voltage is output from the motor driving circuit 33 to the motor coils 14 to rotate the magnetic unit 13 at a rotational speed lower than the particular rotational speed. In contrast, in cases where the converted rotational speed signal Sc indicates a particular rotational speed lower than the target rotational speed value, it is required to heighten the rotational speed of the magnetic unit 13. Therefore, as shown in Fig. 2(f), the motor coil voltage signal Sv indicating a motor coil voltage higher than the standard motor coil voltage is output from the motor driving circuit 33 to the motor coils 14 to rotate the magnetic unit 13 at a rotational speed higher than the particular rotational speed.

Accordingly, because the rotational speed of the magnetic unit 13 is controlled to the target rotational speed value by using the rotational speed detecting encoder 21, the frequency-to-voltage converting unit 32 and the motor driving circuit 33, the rotational speed in the three-phase brushless motor 11 can be maintained at a constant value.

However, to control the rotational speed of the magnetic unit 13, the rotational speed detecting encoder 21 is required. Therefore, because the rotational speed detecting encoder 21 is expensive, there is a problem that the three-phase brushless servo motor 10 cannot be manufactured at a low cost. Also, because the rotational speed detecting encoder 21 is heavy, there is a problem that a moment of inertia in the three-phase brushless servo motor 10 becomes large. Also, because the rotational speed detecting encoder 21 has a large size, there is a problem that the three-phase brushless servo motor 10 cannot be made small.

An object of the present invention is to provide, with due consideration to the drawbacks of such a conventional three-phase brushless servo motor, a three-phase brushless motor which is manufactured at a low cost, has a small size and has a low moment of inertia.

The object of the present invention is achieved by the provision of a three-phase brushless servo motor, comprising:

a brushless motor for performing a driving operation at a particular speed;

motor driving means for applying a driving signal to the brushless motor to make the brushless motor perform the driving operation;

three-phase alternating current signal generating means for generating a three-phase alternating current signal composed of a first alternating current signal, a second alternating current signal and a third alternating current signal, of which phases are different from each other by an electric angle of 120 degrees, according to the driving operation of the brushless motor, a particular portion of the three-phase alternating current signal indirectly indicating the particular speed;

wave-form processing means for processing the three-phase alternating current signal generated by the three-phase alternating current signal generating means to produce a processed speed signal from the particular portion of the three-phase alternating current signal, the processed speed signal directly indicating the particular speed; and

speed control means for controlling the motor driving means to adjust the driving signal applied to the brushless motor according to the processed speed signal produced by the wave-form processing means for the purpose of adjusting the particular speed in the driving operation performed by the brushless motor to a target speed.

In the above configuration, when the motor driving means applies a driving signal to the brushless motor, the brushless motor performs a driving operation at a particular speed. In this case, the particular speed is undesirably changed by turbulences and is shifted from a target speed. Therefore, it is required to adjust the particular speed to the target speed in a servo control.

In the servo control, three alternating current signals, of which phases are different from each other by an electric angle of 120 degrees, are generated as a three-phase alternating current signal in the three-phase alternating current signal generating means when the driving operation is performed by the brushless motor on condition that a particular portion of the three-phase alternating current signal indirectly indicates the particular speed. For example, an inclination of a particular portion of the first alternating current signal, an inclination of a particular portion of the second alternating current signal and an inclination of a particular portion of the third alternating current signal respectively indicate the particular speed.

Thereafter, the three-phase alternating current signal is processed by the wave-form processing means to produce a processed speed signal directly indicating the particular speed from the particular portion of the three-phase alternating current signal. For example, the particular portion of the first alternating current signal, the particular portion of the second alternating current signal and the particular portion of the third alternating current signal are extracted from the three-phase alternating current signal, and the particular portions of the alternating current signals are differentiated to directly indicate the inclinations of the particular portions.

Thereafter, the driving signal applied to the brushless motor is adjusted according to the processed speed signal under the control of the speed control means to adjust the particular speed in the driving operation to the target speed.

Accordingly, even though any speed detecting encoder is not arranged, because the processed speed signal indicating the particular speed is produced during the driving operation of the brushless motor, the particular speed in the driving operation can be adjusted to the target speed according to the processed speed signal, so that the particular speed can be maintained to the target speed even though the driving operation of the brushless motor is adversely influenced on turbulences.

Also, because any speed detecting encoder is not required in the three-phase brushless servo motor, the three-phase brushless servo motor can be manufactured at a low cost, the three-phase brushless servo motor can be made at a small size, and the three-phase brushless servo motor having a low moment of inertia can be manufactured.

It is preferred that each of the alternating current signals composing the three-phase alternating current signal generated by the three-phase alternating current signal generating means be divided into six sub-signals of six processing time units for each cycle of the three-phase alternating current signal, and the wave-form processing means comprise:

arithmetic logic performing means for performing, for each processing time unit, a first judgement whether or not a level A of the first alternating current signal is higher than a level B of the second alternating current signal, a second judgement whether or not the level B of the second alternating current signal is higher than a level C of the third alternating current signal and a third judgement whether or not the level C of the third alternating current signal is higher than the level A of the third alternating current signal, extracting the sub-signal of the first alternating current signal in cases where A>B and C>A are satisfied and B>C is not satisfied, extracting and inverting the sub-signal of the third alternating current signal in cases where A>B is satisfied and B>C or C>A is not satisfied, extracting the sub-signal of the second alternating current signal in cases where A>B and B>C are satisfied and C>A is not satisfied, extracting and inverting the sub-signal of the first alternating current signal in cases where B>C is satisfied and A>B or C>A is not satisfied, extracting the sub-signal of the third alternating current signal in cases where B>C and C>A are satisfied and A>B is not satisfied, extracting and converting the sub-signal of the second alternating current signal in cases where C>A is satisfied and A>B or B>C is not satisfied, and connecting the extracted sub-signals and the extracted and inverted sub-signals with each other in series in the order of the extraction for each cycle of the three-phase alternating current signal to produce a first wave-form processed signal, the extracted sub-signals and the extracted and inverted sub-signals corresponding to the particular portion of the three-phase alternating current signal, and inclinations of the extracted sub-signals and the extracted and inverted sub-signals indicating the particular speed; and
differentiating means for differentiating the first wave-form processed signal produced by the arithmetic logic performing means to produce the processed speed signal.

In the above configuration, each of sub-signals corresponding to straightly-rising (or straightly-falling) line portions of the alternating current signals indicates the particular speed, and a level of one sub-signal corresponding to the straightly-rising (or straightly-falling) line portion is placed between levels of the other two sub-signals not corresponding to the straightly-rising (or straightly-falling) line portion for each processing time unit of the three-phase alternating current signal. Therefore, in the arithmetic logic performing means, to extract the sub-signal corresponding to the straightly-rising (or straightly-falling) line portion for each processing time unit, a following arithmetic logic is performed. In detail, in cases where A>B and C>A are satisfied and B>C is not satisfied, because the level A is placed between the levels C and B, a first sub-signal corresponding to the level A of the first alternating current signal is extracted. In cases where A>B is satisfied and B>C or C>A is not satisfied, because the level C is placed between the levels A and B, a second sub-signal corresponding to the level C of the third alternating current signal is extracted. In cases where A>B and B>C are satisfied and C>A is not satisfied, because the level B is placed between the levels A and C, a third sub-signal corresponding to the level B of the second alternating current signal is extracted. In cases where B>C is satisfied and A>B or C>A is not satisfied, because the level A is placed between the levels B and C, a fourth sub-signal corresponding to the level A of the first alternating current signal is extracted. In cases where B>C and C>A are satisfied and A>B is not satisfied, because the level C is placed between the levels B and A, a fifth sub-signal corresponding to the level C of the third alternating current signal is extracted. In cases where C>A is satisfied and A>B or B>C is not satisfied, because the level B is placed between the levels C and A, a sixth sub-signal corresponding to the level B of the second alternating current signal is extracted. Also, because phases of the first, third and fifth sub-signals are the inverse of those of the second, fourth and sixth sub-signals, the phases of the second, fourth and sixth sub-signals are inverted.

Thereafter, the first sub-signal, the inverted second sub-signal, the third sub-signal, the inverted fourth sub-signal, the fifth sub-signal and the inverted sixth sub-signal are connected with each other in series in that order for each cycle of the three-phase alternating current signal, so that a first wave-form processed signal is produced.

Thereafter, the first wave-form processed signal is differentiated by the differentiating means to produce the processed speed signal.

Because an inclination of the first sub-signal, an inclination of the inverted second sub-signal, an inclination of the third sub-signal, an inclination of the inverted fourth sub-signal, an inclination of the fifth sub-signal and an inclination of the inverted sixth sub-signal respectively indicate the particular speed, the inclinations can be directly indicated by the processed speed signal.

It is also preferred that each of the alternating current signals composing the three-phase alternating current signal generated by the three-phase alternating current signal generating means be divided into six sub-signals of six processing time units for each cycle of the three-phase alternating current signal, and the wave-form processing means comprise:

arithmetic logic performing means for examining, for each processing time unit, a large-small relationship among a level A of the first alternating current signal, a level B of the second alternating current signal and a level C of the third alternating current signal, extracting the sub-signal of the first alternating current signal in case of C>A>B, extracting and inverting the sub-signal of the third alternating current signal in case of A>C>B, extracting the sub-signal of the second alternating current signal in case of A>B>C, extracting and inverting the sub-signal of the first alternating current signal in case of B>A>C, extracting the sub-signal of the third alternating current signal in case of B>C>A, extracting and converting the sub-signal of the second alternating current signal in case of C>B>A, and connecting the extracted sub-signals and the extracted and inverted sub-signals with each other in series in the order of the extraction for each cycle of the three-phase alternating current signal to produce a first wave-form processed signal, the extracted sub-signals and the extracted and inverted sub-signals corresponding to the particular portion of the three-phase alternating current signal, and inclinations of the extracted sub-signals and the extracted and inverted sub-signals indicating the particular speed; and

differentiating means for differentiating the first wave-form processed signal produced by the arithmetic logic performing means to produce the processed speed signal.

In the above configuration, a first sub-signal corresponding to the level A of the first alternating current signal is extracted in case of C>A>B, a second sub-signal corresponding to the level C of the third alternating current signal is extracted and inverted in case of A>C>B, a third sub-signal corresponding to the level B of the second alternating current signal is extracted in case of A>B>C, a fourth sub-signal corresponding to the level A of the first alternating current signal is extracted and inverted in case of B>A>C, a fifth sub-signal corresponding to the level C of the third alternating current signal is extracted in case of B>C>A, and a sixth sub-signal corresponding to the level B of the second alternating current signal is extracted and inverted in case of C>B>A.

Thereafter, the first sub-signal, the inverted second sub-signal, the third sub-signal, the inverted fourth sub-signal, the fifth sub-signal and the inverted sixth sub-signal are connected with each other in series in that order for each cycle of the three-phase alternating current signal, so that a first wave-form processed signal is produced by the arithmetic logic performing means.

Thereafter, the first wave-form processed signal is differentiated by the differentiating means to produce the processed speed signal.

Because an inclination of the first sub-signal, an inclination of the inverted second sub-signal, an inclination of the third sub-signal, an inclination of the inverted fourth sub-signal, an inclination of the fifth sub-signal and an inclination of the inverted sixth sub-signal respectively indicate the particular speed, the inclinations can be directly indicated by the processed speed signal.

The objects, features and advantages of the present invention will be apparent from the following description taken in conjunction with the accompanying drawings, in which:

Fig. 1 is a perspective view of the conventional three-phase brushless servo motor;

Fig. 2(a) is a wave-form view of a rotational speed signal produced in the rotational speed detecting encoder of the conventional three-phase brushless servo motor;

Fig. 2(b) is a wave-form view of a converted rotational speed signal produced in the frequency-to-voltage converting unit of the conventional three-phase brushless servo motor;

Fig. 2(c) is a wave-form view of a timing setting signal denoting a three-phase alternating current voltage produced in the Hall devices of the conventional three-phase brushless servo motor;

Fig. 2(d) is a wave-form view of a motor coil voltage signal produced in the motor driving circuit of the conventional three-phase brushless servo motor in cases where a rotational speed of the magnet unit is a standard value;

Fig. 2(e) is a wave-form view of a motor coil voltage signal produced in the motor driving circuit in cases where a rotational speed of the magnet unit is higher than the standard value;

Fig. 2(f) is a wave-form view of a motor coil voltage signal produced in the motor driving circuit in cases where a rotational speed of the magnet unit is lower than the standard value;

Fig. 3 is a perspective view of a three-phase brushless servo motor according to an embodiment of the present invention;

Fig. 4(a) is a wave-form view of a Hall device signal produced in a Hall device of the three-phase brushless servo motor;

Fig. 4(b) is a wave-form view of a series of straightly-rising line portions and straightly-falling line portions alternately extracted from the Hall device signal according to an arithmetic logic of the embodiment;

Fig. 4(c) is a wave-form view of a first wave-form processed signal produced from the Hall device signal according to the arithmetic logic of the embodiment;

Fig. 4(d) is a wave-form view of a second wave-form processed signal produced by differentiating the first wave-form processed signal;

Fig. 4(e) shows an extracted voltage portion determined by the combination of a first logic A>B, a second logic B>C and a third logic C>A;

Fig. 5 is a flow chart of an arithmetic logic for producing a first wave-form processed signal from a Hall device signal according to the embodiment of the present invention;

Fig. 6 shows a relationship between an extracted sub-signal and an extraction logic (BIT0, BIT1, BIT2);

Fig. 7 shows a positional relationship between magnetic poles and three Hall devices;

Fig. 8 is a flow chart of an arithmetic logic for producing a first wave-form processed signal from a Hall device signal according to a modification of the embodiment of the present invention; and

Fig. 9 shows a relationship between a voltage level order and an extracted sub-signal according to the modification of the embodiment.

Preferred embodiments of a three-phase brushless motor according to the present invention are described with reference to the drawings.

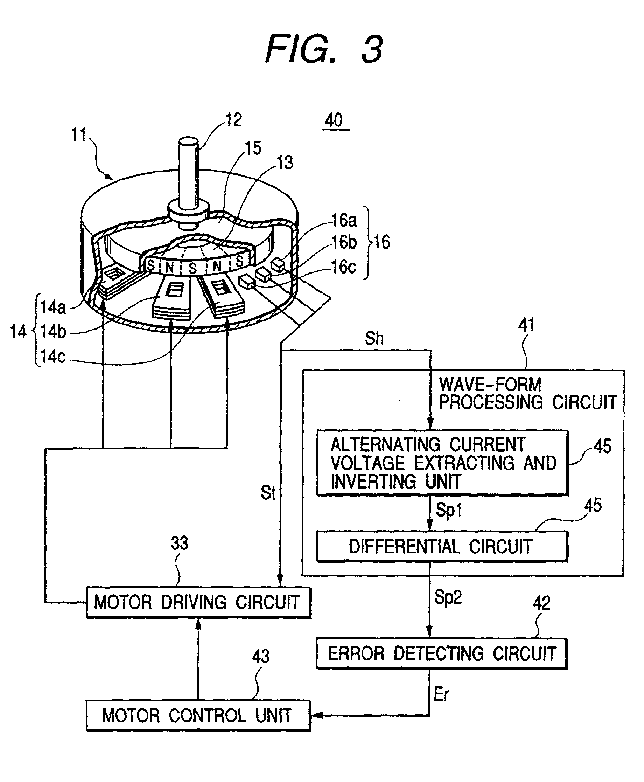

Fig. 3 is a perspective view of a three-phase brushless servo motor according to an embodiment of the present invention.

As shown in Fig. 3, a three-phase brushless servo motor 40 comprises:

the three-phase brushless motor 11 comprising the shaft 12, the, the magnet unit 13, the three motor coils 14 (14a, 14b and 14c), the back-yoke 15 and the three Hall devices 16 (16a, 16b and 16c);

the motor driving circuit 33;

a wave-form processing circuit 41 for receiving a Hall device signal Sh output from the Hall devices 16 of the three-phase brushless motor 11 and processing a wave-form of a three-phase alternating current voltage indicated by the Hall device signal Sh to produce a second wave-form processed signal Sp2 indicating a particular rotational speed of the magnetic unit 13;

an error detecting circuit 42 for detecting a difference between the particular rotational speed of the magnetic unit 13 and a target rotational speed value Vt as a rotational speed error Er according to the second wave-form processed signal Sp2 produced in the wave-form processing circuit 41; and

a motor control unit 43, made of a central processing unit, for controlling the motor driving circuit 33 according to the rotational speed error Er detected in the error detecting circuit 42 to rotate the magnet unit 13 at the target rotational speed value Vt.

The wave-form processing circuit 41 comprises:

an alternating current voltage extracting and inverting unit 44, made of an arithmetic logic unit, for extracting a straightly-rising line portion and a straightly-falling line portion from each of the alternating current voltages composing the three-phase alternating current voltage, inverting a phase of each extracted straightly-falling line portion and producing a first wave-form processed signal Sp1 having a sawtooth wave form by arranging the straightly-rising line portions and the straightly-falling line portions in series; and

a differential circuit 45 for differentiating the first wave-form processed signal Sp1 produced in the alternating current voltage extracting and inverting unit 44 to produce the second wave-form processed signal Sp2.

In the above configuration, an operation of the three-phase brushless servo motor 40 is described.

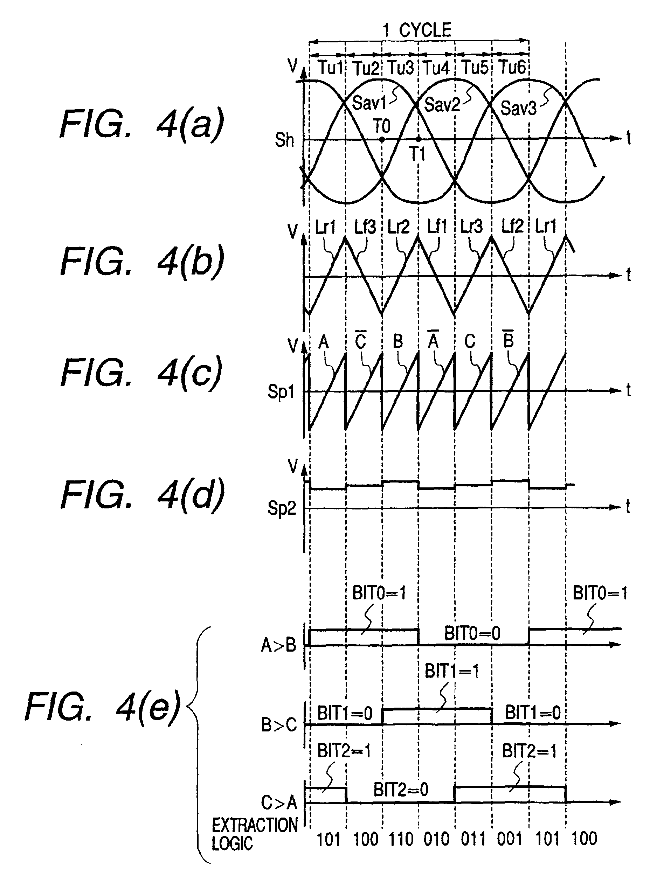

When a motor coil voltage signal Smc is applied from the motor driving circuit 33 to the motor coils 14, the magnetic unit 13 is rotated at a particular rotational speed corresponding to a motor coil voltage indicated by the motor coil voltage signal Smc according to an electro-magnetic effect, a first alternating current voltage signal Sav1 indicating a first alternating current voltage is induced in the Hall device 16a according to the Hall effect, a second alternating current voltage signal Sav2 indicating a second alternating current voltage is induced in the Hall device 16b according to the Hall effect, and a third alternating current voltage signal Sav3 indicating a third alternating current voltage is induced in the Hall device 16c according to the Hall effect. Here, the Hall devices 16 are placed to shift phases of the signals Sav1, Sav2 and Sav3 from each other by the electric angle of 120 degrees. The combination of the signals Sav1, Sav2 and Sav3 is transmitted to the wave-form processing circuit 41 as a Hall device signal Sh. Also, the combination of the signals Sav1, Sav2 and Sav3 is transmitted to the motor driving circuit 33 as a time setting signal St. The Hall device signal Sh is shown in Fig. 4(a).

As shown in Fig. 4(a), the Hall device signal Sh has six crossing points Pc, at which two of the three alternating current voltage signals Sav1, Sav2 and Sav3 cross each other, for each cycle, and a time period between two crossing points adjacent to each other is defined as one processing time unit Tu. Therefore, each cycle of the Hall device signal Sh is divided into six processing time units Tu1 to Tu6. Because each alternating current voltage signal of the Hall device signal Sh is composed of a series of approximately-triangular pulses of which positive and negative levels are alternately changed, each alternating current voltage signal has a level rising portion of an approximately straight line (hereinafter, called a straightly-rising line portion), a top level portion of a curved line, a level falling portion of an approximately straight line (hereinafter, called a straightly-falling line portion) and a low level portion of a curved line for each cycle.

In the alternating current voltage extracting and inverting unit 44 of the wave-form processing circuit 41, as shown in Fig. 4(b), a first straightly-rising line portion Lr1 of the first alternating current voltage signal Sav1 in the processing time units Tu1, a third straightly-falling line portion Lf3 of the third alternating current voltage signal Sav3 in the processing time units Tu2, a second straightly-rising line portion Lr2 of the second alternating current voltage signal Sav2 in the processing time units Tu3, a first straightly-falling line portion Lf1 of the first alternating current voltage signal Sav1 in the processing time units Tu4, a third straightly-rising line portion Lr3 of the third alternating current voltage signal Sav3 in the processing time units Tu5 and a second straightly-falling line portion Lf2 of the second alternating current voltage signal Sav2 in the processing time units Tu6 are extracted from the Hall device signal Sh for each cycle of the Hall device signal Sh. Thereafter, a phase of the third straightly-falling line portion Lf3, a phase of the first straightly-falling line portion Lf1 and a phase of the second straightly-falling line portion Lf2 are inverted to produce an inverted third straightly-falling line portion Lf3, an inverted first straightly-falling line portion Lf1 and an inverted second straightly-falling line portion Lf2, and the first straightly-rising line portion Lr1, the inverted third straightly-falling line portion Lf3, the second straightly-rising line portion Lr2, the inverted first straightly-falling line portion Lf1, the third straightly-rising line portion Lr3 and the inverted second straightly-falling line portion Lf2 are connected to each other in that order for each cycle of the Hall device signal Sh. Therefore, as shown in Fig. 4(c), a first wave-form processed signal Sp1 having a sawtooth wave form is obtained. Here, an inclination of each straightly-rising (or straightly-falling) line portion in the first wave-form processed signal Sp1 indicates the particular rotational speed of the magnet unit 13. The reason is as follows.

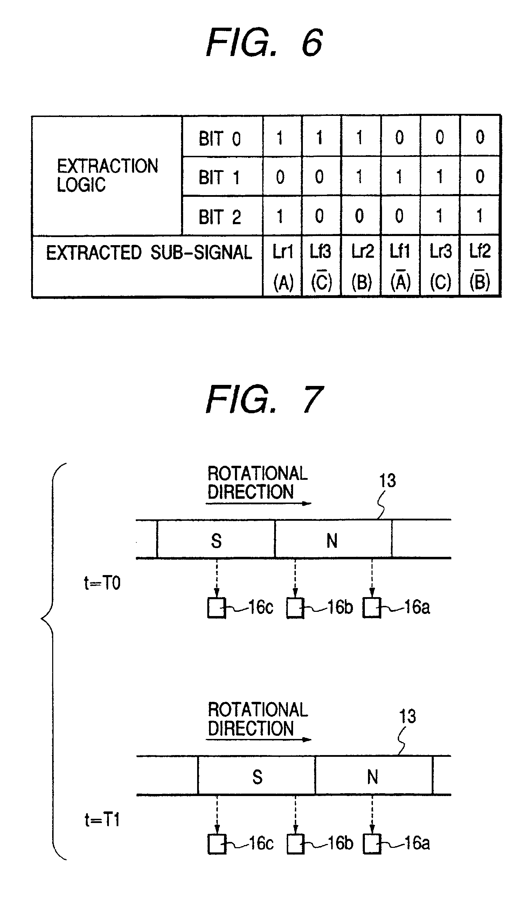

As shown in Fig. 7, for example, a boundary area between N and S magnetic poles of the magnet unit 13 passes just over the second Hall device 16b during the processing time unit Tu3 from a time T0 to a time T1 (refer to Fig. 4(a)). Therefore, a changing degree (voltage change per time) of a Hall voltage induced in the Hall device 16b corresponds to the particular rotational speed of the magnet unit 13, so that an inclination of each straightly-rising (or straightly-falling) line portion indicates the particular rotational speed of the magnet unit 13.

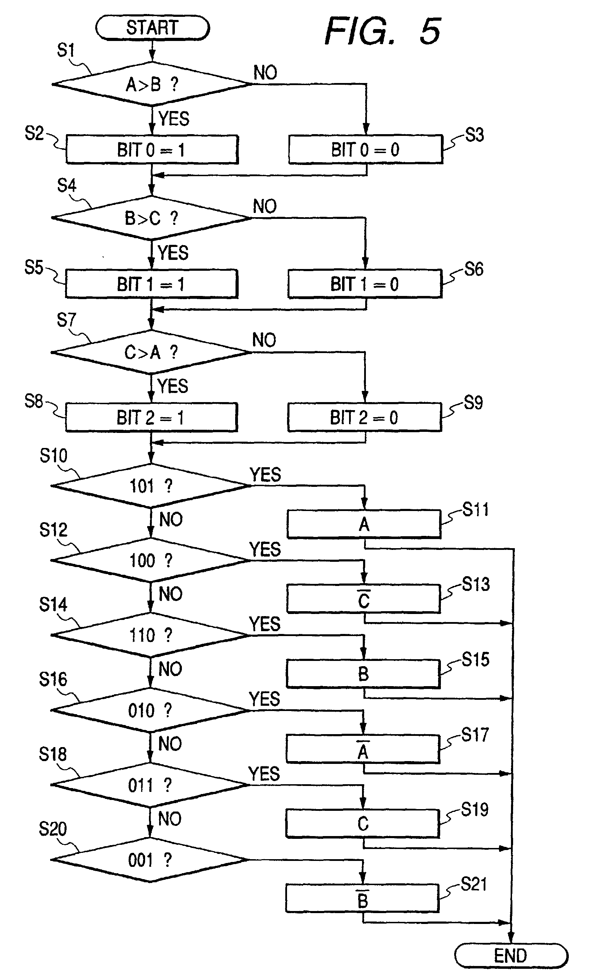

An arithmetic logic of the extraction and inversion performed for the Hall device signal Sh in the alternating current voltage extracting and inverting unit 44 is described with reference to Fig. 5.

Fig. 5 is a flow chart of an arithmetic logic for producing the first wave-form processed signal Sp1 from the Hall device signal Sh according to this embodiment of the present invention. Here, a voltage level of the first alternating current voltage signal Sav1 in each processing time unit is expressed by A, a voltage level of the second alternating current voltage signal Sav2 in each processing time unit is expressed by B, and a voltage level of the third alternating current voltage signal Sav3 in each processing time unit is expressed by C.

As shown in Fig. 5, it is judged in a step S1 whether or not a first logic A>B is satisfied in one processing time unit, BIT0 = 1 is set in case of A>B in a step S2, and BIT0 = 0 is set in a step S3 when A>B is not satisfied. Thereafter, it is judged in a step S4 whether or not a second logic B>C is satisfied in the processing time unit, BIT1 = 1 is set in case of B>C in a step S5, and BIT1 = 0 is set in a step S6 when B>C is not satisfied. Thereafter, it is judged in a step S7 whether or not a third logic C>A is satisfied in the processing time unit, BIT2 = 1 is set in case of C>A in a step S8, and BIT2 = 0 is set in a step S9 when C>A is not satisfied. Thereafter, an extracted sub-signal is determined according to an extraction logic (BIT0, BIT1, BIT2). A relationship between an extracted sub-signal and an extraction logic (BIT0, BIT1, BIT2) is shown in Fig. 6. When (BIT0, BIT1, BIT2) = 101 is satisfied in a step S10, a sub-signal (the first straightly-rising line portion Lr1) corresponding to the voltage level A of the first alternating current voltage signal Sav1 is extracted in a step S11. When (BIT0, BIT1, BIT2) = 100 is satisfied in a step S12, a sub-signal (the third straightly-falling line portion Lf3) corresponding to the voltage level C of the third alternating current voltage signal Sav3 is extracted and inverted in a step S13. When (BIT0, BIT1, BIT2) = 110 is satisfied in a step S14, a sub-signal (the second straightly-rising line portion Lr2) corresponding to the voltage level B of the second alternating current voltage signal Sav2 is extracted in a step S15. When (BIT0, BIT1, BIT2) = 010 is satisfied in a step S16, a sub-signal (the first straightly-falling line portion Lf1) corresponding to the voltage level A of the first alternating current voltage signal Sav1 is extracted and inverted in a step S17. When (BIT0, BIT1, BIT2) = 011 is satisfied in a step S18, a sub-signal (the third straightly-rising line portion Lr3) corresponding to the voltage level C of the third alternating current voltage signal Sav3 is extracted in a step S19. When (BIT0, BIT1, BIT2) = 001 is satisfied in a step S20, a sub-signal (the second straightly-falling line portion Lf2) corresponding to the voltage level B of the second alternating current voltage signal Sav2 is extracted and inverted in a step S21. The steps S1 to S21 are repeated for each processed time unit of the Hall device signal Sh. Therefore, as shown in Fig. 4(e), a series of voltage portions A, $\overline{C}$, B, $\overline{A}$, C and $\overline{B}$ is obtained for each cycle of the Hall device signal Sh.

Thereafter, to obtain the inclination of each straightly-rising line portion in the first wave-form processed signal Sp1, the first wave-form processed signal Sp1 is differentiated in the differential circuit 45, so that a second wave-form processed signal Sp2 shown in Fig. 4(d) is obtained. A voltage of the second wave-form processed signal Sp2 directly indicates the particular rotational speed of the magnet unit 13. Here, a rotational speed of the magnet unit 13 indicated by the first alternating current voltage signal Sav1, a rotational speed of the magnet unit 13 indicated by the second alternating current voltage signal Sav2 and a rotational speed of the magnet unit 13 indicated by the third alternating current voltage signal Sav3 are generally different from each other because Hall effect performances of the Hall devices 16 are different from each other. Therefore, in this embodiment, the particular rotational speed of the magnet unit 13 is set to an average rotational speed of the rotational speeds indicated by the signals Sav1, Sav2 and Sav3.

Thereafter, the second wave-form processed signal Sp2 is transmitted to the error detecting circuit 42, and the particular rotational speed of the magnet unit 13 is compared with a target rotational speed value Vt to detect a difference between the particular rotational speed of the magnetic unit 13 and the target rotational speed value Vt. Thereafter, the difference is transmitted to the control unit 43 as a rotational speed error Er, and a level of the motor coil voltage signal Smc applied to the motor coils 14 is adjusted in the motor driving circuit 33 under the control of the control unit 43 to minimize the rotational speed error Er. That is, a servo control performed for the three-phase brushless servo motor 40 makes the particular rotational speed of the magnet unit 13 equal to the target rotational speed value Vt. Also, a level changing timing in the motor coil voltage signal Smc is adjusted in the servo control according to the timing setting signal St in the motor driving circuit 33.

Accordingly, even though any rotational speed detecting encoder is not arranged in the three-phase brushless servo motor 40, because the second wave-form processed signal Sp2 indicating the particular rotational speed of the magnet unit 13 is produced from the Hall device signal Sh generated in the three-phase brushless motor 11, the particular rotational speed of the magnet unit 13 can be maintained to the target rotational speed value Vt.

Also, because any rotational speed detecting encoder is not required in the three-phase brushless servo motor 40, the three-phase brushless motor 40 can be manufactured at a low cost, the three-phase brushless motor 40 can be made at a small size, and the three-phase brushless motor 40 having a low moment of inertia can be manufactured.

In this embodiment, the arithmetic logic shown in Fig. 4(e), Fig. 5 and Fig. 6 is used in the extraction and inversion to produce the first wave-form processed signal Sp1 having a sawtooth wave form from the Hall device signal Sh. However, the present invention is not limited to this arithmetic logic. Another arithmetic logic for the extraction and inversion is described as a modification of this embodiment.

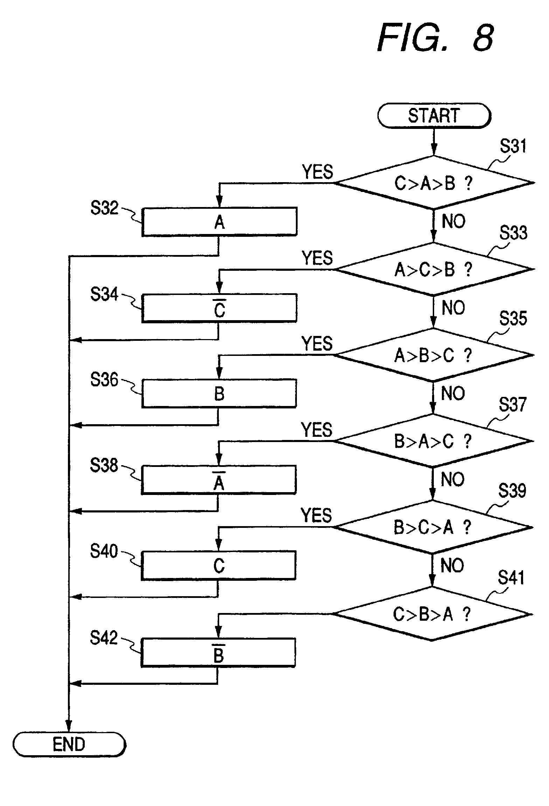

Fig. 8 is a flow chart of another arithmetic logic for producing the first wave-form processed signal Sp1 from the Hall device signal Sh according to a modification of the embodiment.

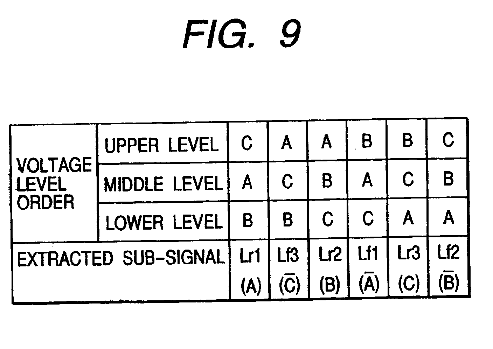

As shown in Fig. 8, it is judged in a step S31 whether or not a voltage level order C>A>B is satisfied, and a sub-signal (or the first straightly-rising line portion Lr1) corresponding to the voltage A of the first alternating current voltage signal Sav1 is extracted in a step S32 in case of C>A>B. When C>A>B is not satisfied, it is judged in a step S33 whether or not a voltage level order A>C>B is satisfied, and a sub-signal (or the third straightly-falling line portion Lf3) corresponding to the voltage C of the third alternating current voltage signal Sav3 is extracted and inverted in a step S34 in case of A>C>B. When A>C>B is not satisfied, it is judged in a step S35 whether or not a voltage level order A>B>C is satisfied, and a sub-signal (or the second straightly-rising line portion Lr2) corresponding to the voltage B of the second alternating current voltage signal Sav2 is extracted in a step S36 in case of A>B>C. When A>B>C is not satisfied, it is judged in a step S37 whether or not a voltage level order B>A>C is satisfied, and a sub-signal (or the first straightly-falling line portion Lf1) corresponding to the voltage A of the first alternating current voltage signal Sav1 is extracted and inverted in a step S38 in case of B>A>C. When B>A>C is not satisfied, it is judged in a step S39 whether or not a voltage level order B>C>A is satisfied, and a sub-signal (or the third straightly-rising line portion Lr3) corresponding to the voltage C of the third alternating current voltage signal Sav3 is extracted in a step S40 in case of B>C>A. When B>C>A is not satisfied, it is judged in a step S41 whether or not a voltage level order C>B>A is satisfied, and a sub-signal (or the second straightly-falling line portion Lf2) corresponding to the voltage B of the second alternating current voltage signal Sav2 is extracted and inverted in a step S42 in case of C>B>A. A relationship between the extracted sub-signal and the voltage level order is shown in Fig. 9. Therefore, a series of voltage portions A, $\overline{C}$, B, $\overline{A}$, C and $\overline{B}$ is obtained for each cycle of the Hall device signal Sh.

Also, in this embodiment, the particular rotational speed of the magnet unit 13 is set to an average rotational speed of the rotational speeds indicated by the signals Sav1, Sav2 and Sav3, and the servo control for the three-phase brushless servo motor 40 is performed according to the rotational speed error Er for each cycle of the Hall device signal Sh. However, it is applicable that a servo control for the three-phase brushless servo motor 40 be performed for each of the signals Sav1, Sav2 and Sav3. That is, the second wave-form processed signal Sp2 is produced for each processing time unit from the corresponding alternating current voltage signal Sav1, Sav2 or Sav3, the rotational speed error Er is set for each processing time unit, and the servo control is performed for each processing time unit of the Hall device signal Sh.

Having illustrated and described the principles of the present invention in a preferred embodiment thereof, it should be readily apparent to those skilled in the art that the invention can be modified in arrangement and detail without departing from such principles. We claim all modifications coming within the scope of the accompanying claims.

## Claims

1.  A three-phase brushless servo motor, comprising:

    a brushless motor for performing a driving operation at a particular speed;
    motor driving means for applying a driving signal to the brushless motor to make the brushless motor perform the driving operation;
    three-phase alternating current signal generating means for generating a three-phase alternating current signal composed of a first alternating current signal, a second alternating current signal and a third alternating current signal, of which phases are different from each other by an electric angle of 120 degrees, according to the driving operation of the brushless motor, a particular portion of the three-phase alternating current signal indirectly indicating the particular speed;
    wave-form processing means for processing the three-phase alternating current signal generated by the three-phase alternating current signal generating means to produce a processed speed signal from the particular portion of the three-phase alternating current signal, the processed speed signal directly indicating the particular speed; and
    speed control means for controlling the motor driving means to adjust the driving signal applied to the brushless motor according to the processed speed signal produced by the wave-form processing means for the purpose of adjusting the particular speed in the driving operation performed by the brushless motor to a target speed.

2.  A three-phase brushless servo motor according to claim 1 in which each of the alternating current signals composing the three-phase alternating current signal generated by the three-phase alternating current signal generating means is divided into six sub-signals of six processing time units for each cycle of the three-phase alternating current signal, and the wave-form processing means comprises:

    arithmetic logic performing means for performing, for each processing time unit, a first judgement whether or not a level A of the first alternating current signal is higher than a level B of the second alternating current signal, a second judgement whether or not the level B of the second alternating current signal is higher than a level C of the third alternating current signal and a third judgement whether or not the level C of the third alternating current signal is higher than the level A of the third alternating current signal, extracting the sub-signal of the first alternating current signal in cases where A>B and C>A are satisfied and B>C is not satisfied, extracting and inverting the sub-signal of the third alternating current signal in cases where A>B is satisfied and B>C or C>A is not satisfied, extracting the sub-signal of the second alternating current signal in cases where A>B and B>C are satisfied and C>A is not satisfied, extracting and inverting the sub-signal of the first alternating current signal in cases where B>C is satisfied and A>B or C>A is not satisfied, extracting the sub-signal of the third alternating current signal in cases where B>C and C>A are satisfied and A>B is not satisfied, extracting and converting the sub-signal of the second alternating current signal in cases where C>A is satisfied and A>B or B>C is not satisfied, and connecting the extracted sub-signals and the extracted and inverted sub-signals with each other in series in the order of the extraction for each cycle of the three-phase alternating current signal to produce a first wave-form processed signal, the extracted sub-signals and the extracted and inverted sub-signals corresponding to the particular portion of the three-phase alternating current signal, and inclinations of the extracted sub-signals and the extracted and inverted sub-signals indicating the particular speed; and

differentiating means for differentiating the first wave-form processed signal produced by the arithmetic logic performing means to produce the processed speed signal.

3. A three-phase brushless servo motor according to claim 1 or claim 2, in which each of the alternating current signals composing the three-phase alternating current signal generated by the three-phase alternating current signal generating means is divided into six sub-signals of six processing time units for each cycle of the three-phase alternating current signal, and the wave-form processing means comprises:

arithmetic logic performing means for examining, for each processing time unit, a large-small relationship among a level A of the first alternating current signal, a level B of the second alternating current signal and a level C of the third alternating current signal, extracting the sub-signal of the first alternating current signal in case of C>A>B, extracting and inverting the sub-signal of the third alternating current signal in case of A>C>B, extracting the sub-signal of the second alternating current signal in case of A>B>C, extracting and inverting the sub-signal of the first alternating current signal in case of B>A>C, extracting the sub-signal of the third alternating current signal in case of B>C>A, extracting and converting the sub-signal of the second alternating current signal in case of C>B>A, and connecting the extracted sub-signals and the extracted and inverted sub-signals with each other in series in the order of the extraction for each cycle of the three-phase alternating current signal to produce a first wave-form processed signal, the extracted sub-signals and the extracted and inverted sub-signals corresponding to the particular portion of the three-phase alternating current signal, and inclinations of the extracted sub-signals and the extracted and inverted sub-signals indicating the particular speed; and

differentiating means for differentiating the first wave-form processed signal produced by the arithmetic logic performing means to produce the processed speed signal.

4. A three-phase brushless servo motor according to claim 1, 2 or 3, in which the speed control means comprises:

an error detecting unit for detecting a difference between the target speed and the particular speed indicated by the processed speed signal produced by the wave-form processing means as an error; and

a control unit for controlling the motor driving means to adjust the driving signal applied to the brushless motor and to make the error detected by the error detecting unit to zero.

5. A three-phase brushless servo motor according to any preceding claim, in which the brushless motor comprises:

a magnet unit having N and S magnetic poles alternately arranged; and

three motor coils, to which the driving signal is applied by the motor driving means, for rotating the magnetic unit at a particular rotational speed according to an electro-magnetic effect caused by the driving signal and a magnetic field of the magnetic unit,

the three-phase alternating current signal generating means comprises:

a first Hall device for inducing an electric potential difference, of which a level is changed each time the N or S pole of the magnetic unit passes over the first Hall device, according to a Hall effect caused by an interaction with the rotated magnetic unit and outputting a changing level of the electric potential difference to the wave-form processing means as the first alternating current signal of the three-phase alternating current signal;

a second Hall device for inducing an electric potential difference, of which a level is changed each time the N or S pole of the magnetic unit passes over the second Hall device, according to a Hall effect caused by an interaction with the rotated magnetic unit and outputting a changing level of the electric potential difference to the wave-form processing means as the second alternating current signal of the three-phase alternating current signal; and

a third Hall device for inducing an electric potential difference, of which a level is changed each time the N or S pole of the magnetic unit passes over the third Hall device, according to a Hall effect caused by an interaction with the rotated magnetic unit and outputting a changing level of the electric potential difference to the wave-form processing means as the third alternating current signal of the three-phase alternating current signal, and

the particular rotational speed of the magnetic unit in the brushless motor is adjusted to the target speed under the control of the speed control means.

6. A three-phase brushless servo motor according to any preceding claim, in which each of the alternating current signals composing the three-phase alternating current signal generated by the three-phase alternating current signal generating means is divided into six sub-signals of six processing time units for each cycle of the three-phase alternating current signal, the processed speed signal is produced by the wave-form processing means for each cycle of the three-phase alternating current signal, and the particular speed in the driving operation performed by the brushless motor is adjusted to the target speed by the speed control means for each cycle.

7. A three-phase brushless servo motor according to any preceding claim, in which each of the alternating current signals composing the three-phase alternating current signal generated by the three-phase alternating current signal generating means is divided into six sub-signals of six processing time units for each cycle of the three-phase alternating current signal, the processed speed signal is produced by the wave-form processing means from one alternating current signal cyclically selected from among the first alternating current signal, the second alternating current signal and the third alternating current signal for each processing time unit of the three-phase alternating current signal, and the particular speed in the driving operation performed by the brushless motor is adjusted to the target speed by the speed control means according to the processed speed signal for each processing time unit.

# FIG. 1
# PRIOR ART

<u>10</u>

FREQUENCY-TO-VOLTAGE
CONVERTING UNIT

MOTOR DRIVING UNIT

FIG. 2(a)
PRIOR ART

FIG. 2(b)
PRIOR ART

FIG. 2(c)
PRIOR ART

FIG. 2(d)
PRIOR ART

FIG. 2(e)
PRIOR ART

FIG. 2(f)
PRIOR ART

# FIG. 3

WAVE-FORM PROCESSING CIRCUIT — 41

ALTERNATING CURRENT VOLTAGE EXTRACTING AND INVERTING UNIT — 45

Sp1

DIFFERENTIAL CIRCUIT — 45

Sp2

ERROR DETECTING CIRCUIT — 42

Er

MOTOR DRIVING CIRCUIT — 33

MOTOR CONTROL UNIT — 43

Sh

St

EP 0 964 506 A2

FIG. 4(a)

FIG. 4(b)

FIG. 4(c)

FIG. 4(d)

FIG. 4(e)

15

# FIG. 5

# FIG. 6

| EXTRACTION LOGIC | BIT 0 | 1 | 1 | 1 | 0 | 0 | 0 |
|---|---|---|---|---|---|---|---|
| | BIT 1 | 0 | 0 | 1 | 1 | 1 | 0 |
| | BIT 2 | 1 | 0 | 0 | 0 | 1 | 1 |
| EXTRACTED SUB-SIGNAL | | Lr1 (A) | Lf3 ($\overline{C}$) | Lr2 (B) | Lf1 ($\overline{A}$) | Lr3 (C) | Lf2 ($\overline{B}$) |

# FIG. 7

ROTATIONAL DIRECTION →

13

| S | N |
|---|---|

t=T0

16c    16b    16a

ROTATIONAL DIRECTION →

13

| S | N |
|---|---|

t=T1

16c    16b    16a

*FIG. 8*

# FIG. 9

| VOLTAGE LEVEL ORDER | UPPER LEVEL | C | A | A | B | B | C |
|---|---|---|---|---|---|---|---|
| | MIDDLE LEVEL | A | C | B | A | C | B |
| | LOWER LEVEL | B | B | C | C | A | A |
| EXTRACTED SUB-SIGNAL | | Lr1 (A) | Lf3 ($\bar{C}$) | Lr2 (B) | Lf1 ($\bar{A}$) | Lr3 (C) | Lf2 ($\bar{B}$) |